# EUROPEAN PATENT SPECIFICATION

(11) **EP 3 543 047 B1**
(45) Date of publication and mention of the grant of the patent: **16.06.2021**
(21) Application number: 19164553.0
(22) Date of filing: 22.03.2019
(51) Int. Cl.: B60H 1/00, F25B 45/00

(54) **SERVICE SYSTEM FOR A VEHICLE AIR CONDITIONING SYSTEM**
SERVICESYSTEM FÜR EINE FAHRZEUGKLIMAANLAGE
SYSTÈME DE SERVICE POUR UN SYSTÈME DE CLIMATISATION DE VÉHICULE

(30) Priority: 23.03.2018 DE 102018204532
(43) Date of publication of application: 25.09.2019
(73) Proprietor: Dometic Sweden AB, 171 54 Solna (SE)
(72) Inventor: Esch, Franz-Josef, 48477 Hörstel (DE)
(74) Representative: Grosse, Felix Christopher

(56) References cited:
- WO-A1-2011/041874
- US-A- 5 220 810
- US-A- 5 560 215
- US-A1- 2011 041 522
- US-B1- 6 648 035

## Description

The present invention relates to a service system for a vehicle air conditioning system having a specific adapter or adapter set for providing the adapter.

Vehicle air conditioning systems contain fluids which are decisive for their performance. These fluids are oils, in particular compressor oils, and coolants which may often contain UV-additives for leakage detection. The fluids have to be refilled or replenished regularly during maintenance of the air conditioning system. Known service systems for maintaining vehicle air conditioning systems, therefore, have a draining and filling device for draining the used fluid out of the respective circuit of the vehicle air conditioning system into a vessel for used fluid and for filling new fluid from a vessel for fresh fluid back into the circuit again. Thereby, the vessels are part of the service system and the vessels are connected to the draining and filling device via respective attachment portions. Typically, the vessels are used repeatedly for a plurality of maintenance services. The vessels for used fluid and fresh fluid can be opened, emptied and refilled, respectively. Usually, the refilling of a vessel with fresh fluid is done by hand, that is a storage container for the fresh fluid is opened by hand and the fluid is poured into the vessel which is then closed again and connected via its attachment portion to the draining and filling device of the service system.

An example for a known service system having a vessel and a corresponding adapter unit to couple the vessel to the attachment portions is for example known from WO 2011/041874 A1. Furthermore, an alternative service system is known from US 2011/041522 A1 and an alternative adapter unit is known from US 5 220 810 A. Although, such service systems and their adapter units are quite suitable for fulfilling the above tasks, there is still some space for further improvement of such service systems and of the corresponding adapter units.

In particular, for the durability and reliability of a vehicle air conditioning system the quality of the introduced fluids is decisive. For example, care must be taken to ensure that as little as possible humidity and water enters the circuit of the vehicle air conditioning system. A disadvantage of some fluids like synthetic oils on the basis of glycol as, for example, PAG oils is, however, that these fluids are hygroscopic. That is, the fluids tend to bind humidity from the surrounding air easily. Therefore, opened storage containers have to be closed immediately after use and the residual oil in the container, after being opened for the first time, is storable for a limited time only. Furthermore, when the fresh fluid is poured into the vessel of the service system, the vessel must be closed immediately as well. Since this is typically done by hand, improper closing of the vessel is possible. Moreover, due to the hygroscopic characteristics of the fluid it is likely that the fluid will bind humidity over the time even when kept inside the vessel as the vessel of such a refillable system itself is, by its nature, not completely tight.

Therefore, there is a need for more reliable service systems for vehicle air conditioning systems in order to prevent contamination of the new fluids to be introduced into the circuit of the vehicle air conditioning system.

This need is met by the subject matters of the present invention defined by the appended set of claims.

The present invention provides a service system for a vehicle air conditioning system, comprising a draining and filling device and a vessel for coolant and/or compressor oil, wherein the draining and filling device is capable of extracting coolant and/or compressor oil from a circuit of the vehicle air conditioning system and filling coolant and/or compressor oil into the circuit of the vehicle air conditioning system. The service system of the present invention further comprises an adapter unit configured to provide a removable connection between the vessel and the draining and filling device and a flow path for the coolant and/or the compressor oil between the vessel and the draining and filling device, wherein the adapter unit comprises at least two coupling portions of which a first coupling portion is configured to be coupled to an attachment portion of the draining and filling device and a second coupling portion is configured to be coupled to an attachment portion of the vessel. The adapter unit provides for a save and reliable connection between the draining and filling device. Furthermore, exposure of the interior of the vessel to the environmental air during connecting and disconnecting the vessel and the draining and filling device can be avoided or at least diminished significantly by the adapter unit. Furthermore, the user is not obliged to use the draining and filling device and the vessel from the same system or manufacture. Instead, the user can choose each of them separately. That is, a vessel of a specific system or supplier can be connected to any available draining and filling device of another system or supplier through a suitable adapter unit. Furthermore, the adapter unit has a specific weight, so that the total weight of the vessel and the adapter unit comply with a target weight specified by the draining and filling device. The adapter unit comprises at least one removably attached weight for adjusting the total weight of the vessel and the adapter unit in order to comply with the target weight.

The vessel can be the one for collecting the used fluid and/or the one for providing the fresh fluid. Preferably, the vessel contains fresh coolant and/or compressor oil to be filled in the vehicle air conditioning system.

The vessel can be one of a one-way vessel or a reusable vessel. Preferably, the vessel is a one-way vessel and is configured to be hermetically sealed until the second coupling portion of the adapter unit is coupled to the attachment portion of the vessel for the first time. This provides for no contamination of the fresh fluid while being stored in the vessel before use of the vessel with the service system and, respectively, no or the lowest possible contamination of the fresh fluid to be introduced into the circuit when the vessel for fresh fluid is connected to the service system.

The vessel may comprise a membrane pouch which is configured to receive and store the fluid, wherein the membrane pouch is preferably provided with a diffusion barrier like, for example a coated foil, in particular a metal coated plastic foil. Further, the vessel may comprise an outer container made of a rigid material like, for example, metal, enclosing the membrane pouch. Thereby, a space between the outer side of the membrane pouch and the inner side of the outer container can be in fluid communication with the environmental atmosphere via at least one opening in the outer container or with another fluid reservoir. This is to allow fluid flow from the reservoir or from the atmosphere to the said space so that the content of the membrane pouch can be removed without difficulty. The space between the outer side of the membrane pouch and the inner side of the outer container may alternatively be hermetically sealed and filled with pressurized fluid. In this embodiment, the coolant and/or compressor oil can be filled into the air conditioning circuit automatically only by opening the flow path to it.

According to a preferred embodiment, the draining and filling device comprises a weighing unit configured to capture the weight of at least the adapter unit and the vessel. Thereby, the amount of fluid extracted from or filled into the vehicle air conditioning system can be controlled easily and automatically.

Another aspect of the present invention refers to the adapter unit for any one of the above described service systems.

The adapter unit is preferably integrally formed, more preferably as a one-piece member. According to another preferred embodiment of the invention, however, the adapter unit is segmented or multi-piece member. Preferably, the adapter unit is segmented into at least two components the first of which comprises the first coupling portion and the second of which comprises the second coupling portion.

According to the present invention, it is, furthermore, possible that the adapter unit additionally comprises a main body which is connectable to the two components. Thereby, the main body and at least one of the two components comprise corresponding threads configured to be engaged with each other. Such an adapter unit is composed sandwich-like wherein the two components have the main body in-between and all three components provide the flow path therethrough. It is, however, preferred that the two components are connected directly to each other without any intermediate part like the said main body.

Preferably, the at least two components are configured to be connected detachably to each other by a threaded coupling. With such a design the adapter portion can be easily and reliable assembled.

Regardless of whether the adapter unit is a one-piece member or a multi-piece member, preferably, the first coupling portion comprises a first thread provided for a threaded coupling between the first coupling portion and the attachment portion of the draining and filling device. Thereby, a save connection can be ensured. More preferably, the first thread is an outer thread.

Preferably, the second coupling portion comprises a second thread provided for a threaded coupling between the second coupling portion and the attachment portion of the vessel. Thereby, a save connection can be ensured. More preferably, the second thread is an outer thread.

Preferably, if the adapter unit has one or more threaded couplings, the adapter unit comprises a portion for tool-assisted manipulation, that is a tool-assisted fastening or unfastening of at least one of the threaded couplings. Thereby, a tight connection can be ensured.

Portions for tool-assisted manipulation can be present on the outside, i.e. on the outer surface of the adapter unit like, for example, drive profiles or recesses for a wrench or spanner. It is also possible that such portions can be present at the inside of the adapter unit like, for example slots for screwdrivers at an entry of the flow path. Preferably, the portion for tool-assisted manipulation comprises a slot for a screwdriver for fastening the threaded coupling between the adapter unit and the vessel, wherein the slot is positioned at an entry of the flow path provided by the adapter unit and pointing to the draining and filling device. In this embodiment, the adapter unit is preferably a one-piece member which is first screwed in the vessel with a screwdriver and then the first coupling portion of the adapter unit is connected to the attachment portion of the draining and filling unit.

The coupling of the first coupling portion of the adapter unit with the attachment portion of the draining and filling unit can be provided by any suitable means. Preferably, the first coupling portion comprises an outer circumferential snap-in groove which is configured to be engaged by a corresponding counterpart of the attachment portion of the draining and filling device. Thereby, a save and quick connection can be ensured.

Preferably, at least one of the two coupling portions, more preferably both, comprises a sealing member configured to hermetically seal the coupling between the adapter unit and the vessel and/or between the adapter unit and the draining and filling device, respectively. The sealing member provides for a more secured connection.

Preferably, the sealing member is an O-ring. More preferably, the O-ring is positioned downstream or upstream the thread (if present) of the coupling portion it is provided at, seen along an intended flow direction of the coolant and/or compressor oil. In case the vessel is the one with fresh fluid, the intended flow direction is from the vessel to the draining and filling device. In this case it is preferred that the second coupling portion which is to be connected to the vessel has the O-ring downstream the thread. At the fist coupling portion it is preferred that the O-ring is as well downstream the thread. Of course, the preferred positions of the O-rings relative to the thread on the first and the second coupling portions are to be regarded independently from each other, i.e. the position of the O-ring on the first coupling portion does not influence the position of the other one, since there is no whatsoever interaction.

Preferably, at least one of the two coupling portions comprises, and more preferably both coupling portions comprise a guiding portion configured to guide the respective coupling portion during coupling the adapter unit with the draining and filling device and/or with the vessel, respectively. The guiding portion facilitates the correct assembly of the components and, in case of a thread, prevents the thread from tilting.

As described above, the adapter unit has a specific weight, so that the total weight of the vessel and the adapter unit comply with a predefined target weight specified by the draining and filling device. In the preferred embodiment of the service system described above, the draining and filling device has a weighing unit so that the amount of extracted or delivered fluid can be controlled. For that purpose, in the draining and filling device a reference weight or as used herein, a target weight, is set and predetermined and cannot be changed by the user. Different systems may have differently specified target weights and, therefore, the adapter unit, which connects one specific vessel with one specific draining and filling device, is designed to have exactly the weight that, in combination with the weight of the vessel, the target weight is met.

Furthermore, the adapter unit comprises at least one removably attached weight for adjusting the total weight of the vessel and the adapter unit in order to comply with the target weight. Thus, the adapter unit or, respectively, the first component thereof does not have to be exchanged completely only if the specified target weight varies. So, when the adapter unit and the vessel are intended to be used with a different draining and filling device, which does not differ in its attachment portion but in the specified target weight, then only the removably attached weight on the adapter unit has to be changed. Preferably, the weights have the form of a ring clip and are attachable to the adapter unit by clipping around a part of the adapter unit.

In case the adapter unit is made of two components as described above, it is preferred that it is the first component which is designed to have exactly the weight so that, together with the weight of the second component and the vessel, the target weight is met. This has the advantage that the second component, which is designed to fit with a specific vessel, can always be the same and does not need to have a different weight when it is used with different draining and filling device-systems. Therefore, according to a preferred embodiment, the target weight can be reached by the first component. That is to say the first component is designed not only in terms of fitting with the attachment portion of the draining and filling device but also that it has a weight so that the total weight of adapter and vessel have the target weight.

Preferably, the first coupling portion comprises a fixing disc which, more preferably, extends radially to the direction of the flow path. The fixing disc provides for a more secure connection. The attachment portion of the draining and filling device of the service system has corresponding means interacting with the fixing disc. If the flow path does not proceed along a straight line through the adapter unit, then the direction, in respect to which the fixing disc extends radially to, is the direction of the flow path at the point where the flow path crosses the area the fixing disc lies in.

The material of the adapter unit is not particularly limited. Preferably, the adapter unit is of metal, so as to withstand multiple connecting and disconnecting procedures. Of course, however, the said sealing members like the O-rings, if present, can be and are preferably of a material different from metal, preferably of rubber or other materials known in the art which are suitable for fulfilling the sealing purpose.

The adapter unit can additionally include further features like, for example, a valve to control the flow of the fluid through the adapter. A suitable and preferred valve may be a butterfly valve.

Another aspect of the present invention refers to an adapter unit set for providing the above described segmented adapter unit. The adapter unit set comprises the second component and at least two of the first components, each being differently designed so as to be connectable to the attachment portion of a specific draining and filling device of the service system according to the invention. For example, the set comprises five different first components configured to fit with five different types of draining and filling devices, and one second component for one type of vessel.

As a preferred embodiment of the adapter unit set, all of the first components comprised by the set have a specific weight so as to provide for the assembled adapter unit and the vessel a specific total weight, which meets with a target weight specified by the specific draining and filling device.

Furthermore, the present invention further refers to any one of the above described service systems comprising any one of the above described specifically configured adapter units.

Finally, the present invention also refers to any one of the above described service systems comprising any one of the above described adapter unit sets.

Various embodiments of the present invention are described in the following with reference to the accompanying drawings, wherein
- Fig. 1A: is a schematic drawing of the service system of the present invention;
- Fig. 1B: is an enlarged part of the drawing in Fig. 1A in more detail;
- Fig. 2A to 2C: show different perspectives of an embodiment of an adapter unit;
- Fig. 3: shows another embodiment of an adapter unit;
- Fig. 4: shows another embodiment of an adapter unit; and
- Fig. 5: shows another embodiment of an adapter unit.

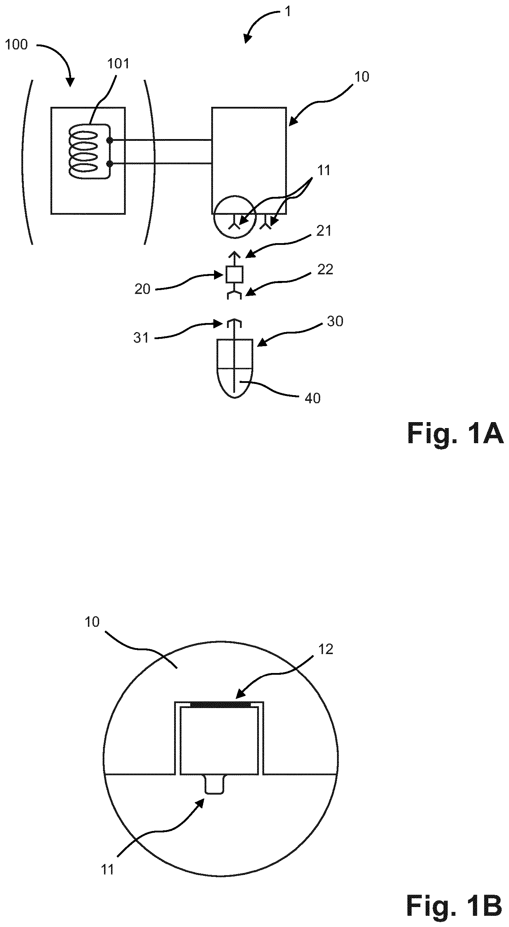

As shown in Fig. 1A, the service system 1 for a vehicle air conditioning system 100 according to the present invention comprises the draining and filling device 10, the adapter unit 20 and the vessel 30 which contains coolant, compressor oil or a mixture thereof 40. The vehicle air conditioning system 100 is illustrated in brackets which indicates that the vehicle air conditioning system 100 itself does not form part of the present invention. The draining and filling device 10 as shown has two fluid connections to the circuit 101 of the vehicle air conditioning system 100 so as to be capable of extracting coolant and/or compressor oil 40 therefrom and filling coolant and/or compressor oil 40 therein. The draining and filling device 10 can, however, also have only one or even more than two fluid connections to the circuit 101 of the vehicle air conditioning system 100.

The adapter unit 20 is connected to the vessel 30 and the draining and filling device 10 and a flow path 23 for the coolant and/or the compressor oil 40 between the vessel 30 and the draining and filling device 10 is formed. For illustration purposes, an almost-connection between the draining and filling device 10, the adapter unit 20 and the vessel 30 is shown so as to better identify which parts belong to which components. The adapter unit 20 has two coupling portions 21, 22 of which the first coupling portion 21 is configured to be coupled to the attachment portion 11 of the draining and filling device 10 and the second coupling portion 22 is configured to be coupled to the attachment portion 31 of the vessel 30. In Fig. 1A, exemplarily two attachment portions 11 are shown.

The vessel 30 is assembled in an upright position. Therefore, the vessel 30 has a tube inside basically working like a drinking straw so that all or at least most of the fluid inside the vessel 30 can be introduced into the vehicle air conditioning system 100.

As shown in Fig. 1B, the draining and filling device 10 has a weighing unit 12 for weighing what is attached to the attachment portion 11 of the draining and filling device 10. The weighing unit 12 is electrically connected to a control system (not shown) of the draining and filling device 10 which comprises an interface, like a display and/or touch panel, for displaying information to the user and for enabling the user to control the maintenance procedure.

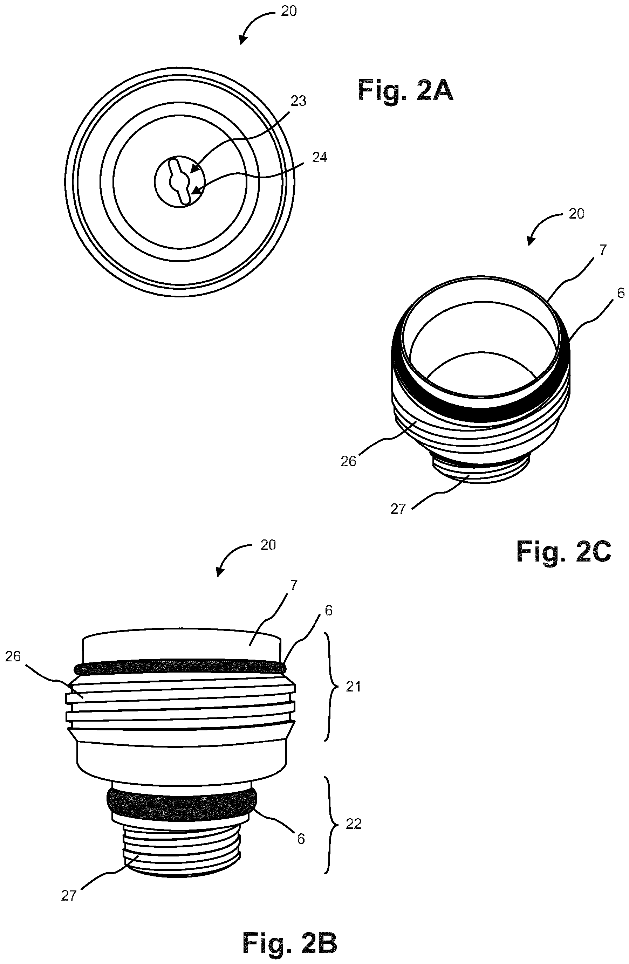

Figs. 2A, 2B and 2C show a preferred embodiment of the adapter unit 20 which is designed as a one-piece member. The adapter unit 20 has two treaded portions 26, 27 at the coupling portions 21, 22. The first coupling portion 21, which with respect to the side view in Fig. 2B is the upper coupling portion, is larger, meaning that it has a larger diameter than the second coupling portion 22. Each of the coupling portions 21, 22 has an O-ring as a sealing member 6 both of which are positioned downstream the respective thread 26, 27, seen along the intended flow direction of the coolant and/or compressor oil 40 which, in Fig. 2B, is from bottom to top.

Fig. 2C is a perspective view on the adapter unit 20 and Fig. 2A is the view when looking along the flow path 23 of the adapter unit 20 from above (with respect to Fig. 2B). That is, what is visible in Fig. 2A will be invisible when the first coupling portion 21 is connected to the attachment portion 11 of the draining and filling device 10. Besides the flow path 23, a slot as one form of a portion for a tool-assisted manipulation 29 is present directly at the entrance of the flow path 23. The slot is for engaging with a screwdriver or a similar tool in order to fasten or unfasten the threaded connection between the adapter unit 20 and the vessel 30 or, respectively, between the second coupling portion 22 and the attachment portion 31 of the vessel 30.

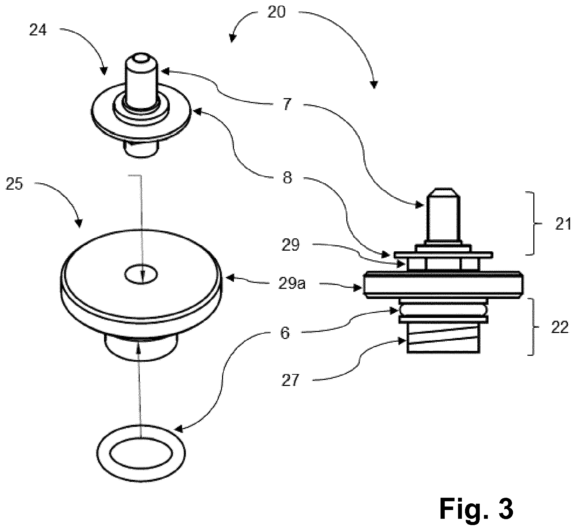

Fig. 3 shows an embodiment of a segmented adapter unit 20 being composed of the first component 24 and the second component 25. On the left part of Fig. 3 the individual components of the adapter unit 20 are shown in an explosion diagram while on the right part the assembled adapter 20 is shown. The components 24, 25 are connected to each other by a threaded connection which can be fastened and released by a wrench or similar tool engaging with the hexagonal portion being another form of a portion for tool-assisted manipulation 29 on the component 24.

The upper component 24 in Fig. 3 is the one with the first coupling portion 21 intended to be connected with the attachment portion 11 of the draining and filling device 10. The first component 24 has a guiding portion 7 which is longer (in flow direction) than that of the adapter unit shown in Figs. 2A to 2C. The component 24 further has a fixing disc 8. The flow path 23 passing through the adapter unit 20 is straight and the fixing disc 8 extends radially to the direction of the flow path 23. The fixing disc 8 can, for example, clamp or snap-in into a corresponding portion of the attachment portion 11 of the draining and filling device 10.

The lower component in Fig. 3 being the second component 25 accordingly is the one with the second coupling portion 22 intended to be connected with the attachment portion 31 of the vessel 30. As can be recognized, the second coupling portion 22 of this embodiment corresponds to that of the embodiment shown in Figs. 2A to 2C in that it identically comprises the thread 27 and the O-ring 6. This is because both adapter units 20 shown in Figs. 2A to 2C and in Fig. 3 are intended to be connected to the same type of vessel 30. When the adapter unit 20 is already in an assembled state, the connection between component 25 and the vessel 30 can either be fastened by using a tool, e.g. a wrench or spanner or the like with the portion for tool-assisted manipulation 29 at component 24, or by hand with the grip portion 29a. To unscrew the lower component 25 or the entire adapter unit 20 from the vessel 30 again, the grip portion 29a can be used and actuated by hand. In order to provide a suitable grip and prevent slipping, the outer circumferential surface of the grip portion 29a has a rough or coarse structure. Both components 24, 25 are made of metal in order to provide high durability, whereas also other suitable materials, like plastic, are in principle usable.

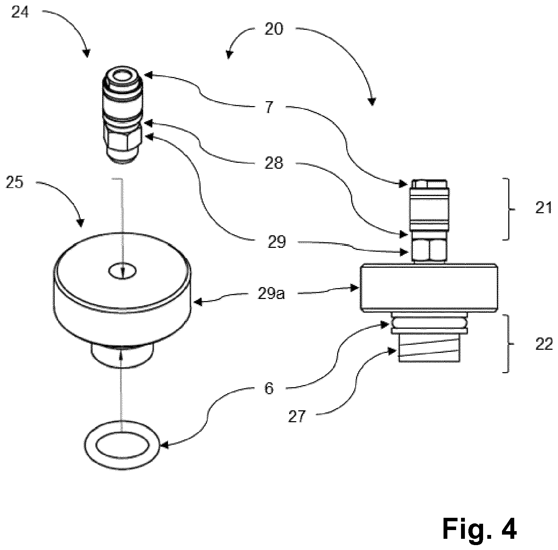

Fig. 4 again shows an embodiment of a segmented adapter unit 20 being composed of the first component 24 and the second component 25. On the left part of Fig. 4 the individual components of the adapter unit 20 are shown in an explosion diagram while on the right part the assembled adapter 20 is shown. Component 24 is designed as a female connector. At the lower part 25 there is the second coupling portion 22. The second coupling portion 22 is to be connected with the attachment portion 31 of the vessel 30 which, again, is designed as that of the adapter unit 20 shown in Figs. 2A to 2C. It has an O-ring 6 and a second thread 27. The adapter unit 20 further has a rather broad circumferential grip portion 29a, compared to that of Fig. 3, which can be grabbed by the hand in order to fasten and unfasten the threaded connection with the attachment portion 31 of the vessel 30. In order to provide a suitable grip and prevent slipping, the outer circumferential surface of the grip portion 29a has a rough or coarse structure.

The adapter unit 20 shown in Fig. 4 further has a portion for tool-assisted manipulation 29 which can be used as well for fastening the threaded connection with the attachment portion 31 of the vessel 30. Further, a snap-in groove 28 is provided on the outer surface of the first component 24 which provides for an easy and quick connection between the first coupling portion 21 and the attachment portion 11 of the draining and filling device 10. To be precise, the snap-in groove 28 of this embodiment is rather one snap-in edge followed by the portion for tool-assisted manipulation 29. Finally, the adapter unit 20 or, respectively, the first component 24 has a guiding portion 7 at the first coupling portion 21.

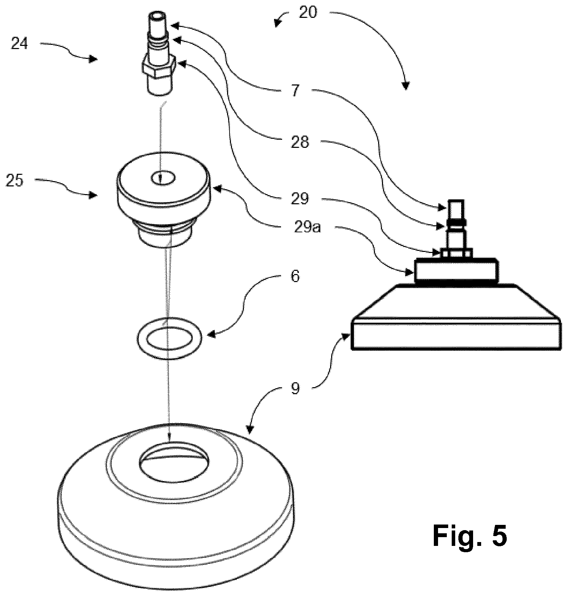

Fig. 5 shows another embodiment of the adapter unit 20 which is composed generally of two components 24, 25. On the left part of Fig. 5 the individual components of the adapter unit 20 are shown in an explosion diagram while on the right part the assembled adapter 20 is shown. The lower and second component 25 is the one to be connected to the attachment portion 31 of the vessel 30 which again has a second thread 27 and an O-ring 6 at its second coupling portion 22 and a grip portion 29a. Furthermore, second component 25 is coupled to a load cell bracket adapter 9 which, analogously to the O-ring, is pushed over the thread 27 from below. The load cell bracket adapter 9 is advantageously dimensioned to cover the vessel 30 from above. The load cell bracket adapter 9 is advantageously made of plastic.

The first component 24 is connected with the second component 25 by a connection which is fastened or unfastened by use of the grip portion 29a of component 25 and the portion for tool-assisted manipulation 29 of component 24. Both the first component 24 and the second component 25 are made of metal. In case the adapter unit set according to the invention is provided, it would be suitable to provide the first component 24 of plastic, since in this case, as specified above, component 25 is always the same while component 24 can be changed depending on the type or system of the draining and filling device 10 used. Contrary to the embodiment shown in Fig. 4, component 24 is designed as a male connector having a rather long guiding portion 7. Limiting the guiding portion 7 there is a circumferential rim defining one wall of the subsequent snap-in groove 28. The dimensions of the snap-in groove 28 are not particularly limited. A broadness of between 1 mm and 3 mm and a depth of 0.5 mm to 1.5 mm in most cases is sufficient in order to provide a secure connection.

It will be appreciated that the various features of the embodiments described herein are regarded separately disclosed from each other, since each feature fulfills its particular purpose, unless they are mandatorily interrelated with each other.

However, the scope of protection of this document is defined by the appended set of claims.

### LIST OF REFERENCE SIGNS

- 1: service system
- 6: sealing member
- 7: guiding portion
- 8: fixing disc
- 9: load cell bracket adapter
- 10: draining and filling device
- 11: attachment portion of the draining and filling device
- 12: weighing unit
- 20: adapter unit
- 21: first coupling portion
- 22: second coupling portion
- 23: flow path
- 24: first component
- 25: second component
- 26: first thread
- 27: second thread
- 28: snap-in groove
- 29: portion for tool-assisted manipulation
- 29a: grip portion
- 30: vessel
- 31: attachment portion of the vessel
- 40: coolant, compressor oil or mixture thereof
- 100: vehicle air conditioning system
- 101: circuit of the vehicle air conditioning system

## Claims

1. A service system (1) for a vehicle air conditioning system (100), comprising
a draining and filling device (10) and
a vessel (30) for coolant and/or compressor oil (40), wherein
the draining and filling device (10) is capable of extracting coolant and/or compressor oil (40) from a circuit (101) of the vehicle air conditioning system (100) and filling coolant and/or compressor oil (40) into the circuit (101) of the vehicle air conditioning system (100),
wherein the service system (1) comprises an adapter unit (20) configured to provide a removable connection between the vessel (30) and the draining and filling device (10) and a flow path (23) for the coolant and/or the compressor oil (40) between the vessel (30) and the draining and filling device (10), wherein the adapter unit (20) comprises at least two coupling portions (21, 22) of which a first coupling portion (21) is configured to be coupled to an attachment portion (11) of the draining and filling device (10) and a second coupling portion (22) is configured to be coupled to an attachment portion (31) of the vessel (30)
**characterized in that**
the adapter unit (20) has a specific weight, so that the total weight of the vessel (30) and the adapter unit (20) comply with a target weight specified by the draining and filling device (10) and the adapter unit (20) comprises at least one removably attached weight for adjusting the total weight of the vessel (30) and the adapter unit (20) in order to comply with the target weight.

2. The service system (1) according to claim 1,
wherein the vessel (30) contains fresh coolant and/or compressor oil (40) to be filled in the vehicle air conditioning system (100).

3. The service system (1) according to claim 1 or 2,
wherein the vessel (30) is a one-way vessel and is configured to be hermetically sealed until the second coupling portion (22) of the adapter unit (20) is coupled to the attachment portion (31) of the vessel (30).

4. The service system (1) according to any of claims 1 to 3,
wherein the draining and filling device (10) comprises a weighing unit (12) configured to capture the weight of at least the adapter unit (20) and the vessel (30).

5. The adapter unit (20) for the service system (1) of any one of the preceding claims.

6. The adapter unit (20) according to claim 5,
wherein the adapter unit (20) is segmented into at least two components (24, 25) the first (24) of which comprises the first coupling portion (21) and the second (25) of which comprises the second coupling portion (22).

7. The adapter unit (20) according to claim 6,
wherein the at least two components (24,25) are configured to be connected detachably to each other by a threaded coupling.

8. The adapter unit (20) according to any one of claims 5 to 7
wherein the first coupling portion (21) comprises a first thread (26) provided for a threaded coupling between the first coupling portion (21) and the attachment portion (11) of the draining and filling device (10).

9. The adapter unit (20) according to claim 8,
wherein the first thread (26) is an outer thread.

10. The adapter unit (20) according to any one of claims 5 to 9,
wherein the second coupling portion (22) comprises a second thread (27) provided for a threaded coupling between the second coupling portion (22) and the attachment portion (31) of the vessel (30).

11. The adapter unit (20) according to claim 10,
wherein the second thread (27) is an outer thread.

12. The adapter unit (20) according to at least one of the claims 7, 8 and 10,
wherein the adapter unit comprises a portion for tool-assisted manipulation (29) of at least one of the threaded couplings.

13. The adapter unit (20) according to claim 12,
wherein the portion for tool-assisted manipulation (29) comprises a slot for fastening or unfastening the threaded coupling between the adapter unit (20) and the vessel (30), wherein the slot is positioned at an entry of the flow path (23) provided by the adapter unit (20) and pointing to the draining and filling device (10).

14. The adapter unit (20) according to any one of claims 5 to 13,
wherein the first coupling portion (21) comprises an outer circumferential snap-in groove (28) which is configured to be engaged by a corresponding counterpart of the attachment portion (11) of the draining and filling device (10).

15. The adapter unit (20) according to any one of claims 5 to 14,
wherein at least one of the two coupling portions (21, 22) comprises a sealing member (6) configured to hermetically seal the coupling between the adapter unit (20) and the vessel (30) and/or between the adapter unit (20) and the draining and filling device (10).

16. The adapter unit (20) according to claim 15 and at least one of claims 8 and 10,
wherein the sealing member (6) is an O-ring which is positioned downstream or upstream the thread (26, 27) of the coupling portion (21, 22) it is provided at, seen along an intended flow direction of the coolant and/or compressor oil (40).

17. The adapter unit (20) according to any one of claims 5 to 16,
wherein at least one of the two coupling portions (21, 22) comprises a guiding portion (7) configured to guide the respective coupling portion (21, 22) during coupling the adapter unit (20) with the draining and filling device (10) and/or with the vessel (30).

18. The adapter unit (20) according to any one of claims 6 to 17,
wherein the target weight can be reached by the first component 24.

19. The adapter unit (20) according to any one of claims 5 to 18,
wherein the first coupling portion (21) comprises a fixing disc (8).

20. An adapter unit set for providing the adapter unit (20) according to any one of claims 5 to 19, in combination with claim 6, comprising the second component (25) and at least two of the first components (24), each being differently designed so as to be connectable to the attachment portion (11) of a specific draining and filling device (10) of the service system (1) according to any one of claims 1 to 4.

21. The adapter unit set according to claim 20, wherein all of the first components (24) comprised by the set have a specific weight so as to provide for the assembled adapter unit (20) and the vessel (30) a specific total weight, which meets with a target weight specified by the specific draining and filling device (10).

22. The service system (1) according to any one of claims 1 to 4, comprising the adapter unit (20) according any one of claims 6 to 19.

23. The service system (1) according to any one of claims 1 to 4, comprising the adapter unit set according to claim 20 or 21.

## Patentansprüche

1. Ein Servicesystem (1) für eine Fahrzeug-Klimaanlage (100), umfassend
eine Entleerungs- und Befüllungsvorrichtung (10) und
einen Behälter (30) für Kühlmittel und/oder Kompressoröl (40), wobei
die Entleerungs- und Befüllungsvorrichtung (10) in der Lage ist, Kühlmittel und/oder Kompressoröl (40) aus einem Kreislauf (101) der Fahrzeug-Klimaanlage (100) zu entleeren und Kühlmittel und/oder Kompressoröl (40) in den Kreislauf (101) der Fahrzeug-Klimaanlage (100) einzufüllen, wobei das Servicesystem (1) eine Adaptereinheit (20) umfasst, die konfiguriert ist, um eine lösbare Verbindung zwischen dem Behälter (30) und der Entleerungs- und Befüllungsvorrichtung (10) sowie einen Strömungsweg (23) für das Kühlmittel und/oder das Kompressoröl (40) zwischen dem Behälter (30) und der Entleerungs- und Befüllungsvorrichtung (10) bereitzustellen, wobei die Adaptereinheit (20) mindestens zwei Kupplungsabschnitte (21, 22) aufweist, von denen ein erster Kupplungsabschnitt (21) zum Verbinden mit einem Befestigungsabschnitt (11) der Entleerungs- und Befüllungsvorrichtung (10) und ein zweiter Kupplungsabschnitt (22) zum Verbinden mit einem Befestigungsabschnitt (31) des Behälters (30) ausgebildet ist
**dadurch gekennzeichnet, dass**
die Adaptereinheit (20) ein spezifisches Gewicht aufweist, so dass das Gesamtgewicht des Behälters (30) und der Adaptereinheit (20) einem von der Entleerungs- und Befüllungsvorrichtung (10) vorgegebenen Zielgewicht entspricht, und die Adaptereinheit (20) mindestens ein abnehmbar angebrachtes Gewicht zum Einstellen des Gesamtgewichts des Behälters (30) und der Adaptereinheit (20) umfasst, um dem Zielgewicht zu entsprechen.

2. Das Servicesystem (1) nach Anspruch 1,
wobei der Behälter (30) frisches Kühlmittel und/oder Kompressoröl (40) enthält, welches in die Fahrzeug-Klimaanlage (100) eingefüllt werden soll.

3. Das Servicesystem (1) nach Anspruch 1 oder 2,
wobei der Behälter (30) ein Einwegbehälter ist und konfiguriert ist, um hermetisch verschlossen zu sein, bis der zweite Kupplungsabschnitt (22) der Adaptereinheit (20) mit dem Befestigungsabschnitt (31) des Behälters (30) gekoppelt wird.

4. Das Servicesystem (1) nach einem der Ansprüche 1 bis 3,
wobei die Entleerungs- und Befüllungsvorrichtung (10) eine Wiegeeinheit (12) umfasst, die so konfiguriert ist, dass sie das Gewicht zumindest der Adaptereinheit (20) und des Behälters (30) erfasst.

5. Die Adaptereinheit (20) für das Servicesystem (1) nach einem der vorhergehenden Ansprüche.

6. Die Adaptereinheit (20) nach Anspruch 5,
wobei die Adaptereinheit (20) in mindestens zwei Komponenten (24, 25) segmentiert ist, von denen die erste (24) den ersten Kupplungsabschnitt (21) und die zweite (25) den zweiten Kupplungsabschnitt (22) umfasst.

7. Die Adaptereinheit (20) nach Anspruch 6,
wobei die mindestens zwei Komponenten (24, 25) so konfiguriert sind, dass sie durch eine Schraubverbindung lösbar miteinander verbunden sind.

8. Die Adaptereinheit (20) nach einem der Ansprüche 5 bis 7
wobei der erste Kupplungsabschnitt (21) ein erstes Gewinde (26) aufweist, welches für eine Schraubverbindung zwischen dem ersten Kupplungsabschnitt (21) und dem Befestigungsabschnitt (11) der Entleerungs- und Befüllungsvorrichtung (10) vorgesehen ist.

9. Die Adaptereinheit (20) nach Anspruch 8,
wobei das erste Gewinde (26) ein Außengewinde ist.

10. Die Adaptereinheit (20) nach einem der Ansprüche 5 bis 9,
wobei der zweite Kupplungsabschnitt (22) ein zweites Gewinde (27) aufweist, welches für eine Schraubverbindung zwischen dem zweiten Kupplungsabschnitt (22) und dem Befestigungsabschnitt (31) des Behälters (30) vorgesehen ist.

11. Die Adaptereinheit (20) nach Anspruch 10,
wobei das zweite Gewinde (27) ein Außengewinde ist.

12. Die Adaptereinheit (20) nach mindestens einem der Ansprüche 7, 8 und 10,
wobei die Adaptereinheit einen Abschnitt zur werkzeugunterstützten Manipulation (29) von mindestens einer der Schraubverbindungen aufweist.

13. Die Adaptereinheit (20) nach Anspruch 12,
wobei der Abschnitt zur werkzeugunterstützten Manipulation (29) einen Schlitz zum Befestigen oder Lösen der Schraubverbindung zwischen der Adaptereinheit (20) und dem Behälter (30) aufweist, wobei der Schlitz an einem Eingang des von der Adaptereinheit (20) bereitgestellten und zur Entleerungs- und Befüllungsvorrichtung (10) weisenden Strömungswegs (23) positioniert ist.

14. Die Adaptereinheit (20) nach einem der Ansprüche 5 bis 13,
wobei der erste Kupplungsabschnitt (21) eine äußere umlaufende Einrastnut (28) umfasst, die so konfiguriert ist, dass sie mit einem entsprechenden Gegenstück des Befestigungsabschnitts (11) der Entleerungs- und Befüllungsvorrichtung (10) in Eingriff kommt.

15. Die Adaptereinheit (20) nach einem der Ansprüche 5 bis 14,
wobei mindestens einer der beiden Kupplungsabschnitte (21, 22) ein Dichtungselement (6) umfasst, das so konfiguriert ist, dass es die Verbindung zwischen der Adaptereinheit (20) und dem Behälter (30) und/oder zwischen der Adaptereinheit (20) und der Entleerungs- und Befüllungsvorrichtung (10) hermetisch abdichtet.

16. Die Adaptereinheit (20) nach Anspruch 15 und mindestens einem der Ansprüche 8 und 10,
wobei das Dichtungselement (6) ein O-Ring ist, der entlang einer beabsichtigten Strömungsrichtung des Kühlmittels und/oder Kompressoröls (40) gesehen stromabwärts oder stromaufwärts des Gewindes (26, 27) desjenigen Kupplungsabschnitts (21, 22), an dem er vorgesehen ist, positioniert ist.

17. Die Adaptereinheit (20) nach einem der Ansprüche 5 bis 16,
wobei mindestens einer der beiden Kupplungsabschnitte (21, 22) einen Führungsabschnitt (7) aufweist, der so ausgebildet ist, dass er den jeweiligen Kupplungsabschnitt (21, 22) beim Verbinden der Adaptereinheit (20) mit der Entleerungs- und Befüllungsvorrichtung (10) und/oder mit dem Behälter (30) führt.

18. Die Adaptereinheit (20) nach einem der Ansprüche 6 bis 17,
wobei das Zielgewicht durch die erste Komponente 24 erreicht werden kann.

19. Die Adaptereinheit (20) nach einem der Ansprüche 5 bis 18,
wobei der erste Kupplungsabschnitt (21) eine Befestigungsscheibe (8) umfasst.

20. Ein Adaptereinheit-Set zur Bereitstellung der Adaptereinheit (20) nach einem der Ansprüche 5 bis 19 in Verbindung mit Anspruch 6, umfassend die zweite Komponente (25) und mindestens zwei der ersten Komponente (24), die jeweils unterschiedlich ausgebildet sind, um mit dem Befestigungsabschnitt (11) einer bestimmten Entleerungs- und Befüllungsvorrichtung (10) des Servicesystems (1) nach einem der Ansprüche 1 bis 4 verbindbar zu sein.

21. Das Adaptereinheit-Set nach Anspruch 20, wobei alle ersten Komponenten (24), die das Set umfasst, ein spezifisches Gewicht aufweisen, um für die zusammengebaute Adaptereinheit (20) und den Behälter (30) ein spezifisches Gesamtgewicht bereitzustellen, das einem von der spezifischen Entleerungs- und Befüllungsvorrichtung (10) vorgegebenen Zielgewicht entspricht.

22. Das Servicesystem (1) nach einem der Ansprüche 1 bis 4, umfassend die Adaptereinheit (20) nach einem der Ansprüche 6 bis 19.

23. Das Servicesystem (1) nach einem der Ansprüche 1 bis 4, umfassend das Adaptereinheit-Set nach Anspruch 20 oder 21.

## Revendications

1. Système de service (1) pour un système (100) de climatisation de véhicule, comprenant
un dispositif de vidange et remplissage (10) et
un récipient (30) pour réfrigérant et/ou huile de compresseur (40),
ledit dispositif de vidange et remplissage (10) étant apte à extraire réfrigérant et/ou huile de compresseur (40) d'un circuit (101) du système (100) de climatisation de véhicule et remplir réfrigérant et/ou huile de compresseur (40) dans le circuit (101) du système (100) de climatisation de véhicule,
ledit système de service (1) comprenant une unité adaptatrice (20) configurée pour offrir une connexion amovible entre le récipient (30) et le dispositif de vidange et remplissage (10) et une voie d'écoulement (23) pour le réfrigérant et/ou l'huile de compresseur (40) entre le récipient (30) et ledit dispositif de vidange et remplissage (10), ladite unité adaptatrice (20) comprenant au moins deux parties de raccord (21, 22) dont une première partie de raccord (21) est configurée pour être raccordée à une partie d'attachement (11) dudit dispositif de vidange et remplissage (10) et une deuxième partie de raccord (22) est configurée pour être raccordée à une partie d'attachement (31) dudit récipient (30)
**caractérisé en ce que**
ladite unité adaptatrice (20) a un poids particulier afin que le poids total dudit récipient (30) et de ladite unité adaptatrice (20) est conforme à un poids cible spécifié par ledit dispositif de vidange et remplissage (10) et ladite unité adaptatrice (20) comprend au moins un poids, qui est attaché de façon amovible, pour ajuster le poids total dudit récipient (30) et de ladite unité adaptatrice (20) afin d'être conforme au poids cible.

2. Système de service (1) selon la revendication 1, dans lequel
ledit récipient (30) contient réfrigérant neuf et/ou huile de compresseur neuve (40) qui est à remplir dans le système (100) de climatisation de véhicule.

3. Système de service (1) selon la revendication 1 ou 2, dans lequel
ledit récipient (30) est un récipient jetable et il est configuré pour être hermétiquement scellé jusqu'à ce que la deuxième partie de raccord (22) de ladite unité adaptatrice (20) est raccordée à la partie d'attachement (31) dudit récipient (30).

4. Système de service (1) selon l'une quelconque des revendications 1 à 3, dans lequel
ledit dispositif de vidange et remplissage (10) comprend une unité de pesage (12) configurée pour détecter le poids au moins de ladite unité adaptatrice (20) et dudit récipient (30).

5. Unité adaptatrice (20) pour le système de service (1) selon l'une quelconque des revendications précédentes.

6. Unité adaptatrice (20) selon la revendication 5, dans laquelle
ladite unité adaptatrice (20) est segmentée en au moins deux composants (24, 25) dont le premier (24) comprend la première partie de raccord (21) et dont le deuxième (25) comprend la deuxième partie de raccord (22).

7. Unité adaptatrice (20) selon la revendication 6, dans laquelle
lesdits au moins deux composants (24, 25) sont configurés pour être connectés entre eux de façon amovible par un raccord vissé.

8. Unité adaptatrice (20) selon l'une quelconque des revendications 5 à 7, dans laquelle
la première partie de raccord (21) comprend un premier filetage (26) prévu pour un raccord vissé entre la première partie de raccord (21) et ladite partie d'attachement (11) dudit dispositif de vidange et remplissage (10).

9. Unité adaptatrice (20) selon la revendication 8, dans laquelle
le premier filetage (26) est un filetage extérieur.

10. Unité adaptatrice (20) selon l'une quelconque des revendications 5 à 9, dans laquelle
la deuxième partie de raccord (22) comprend un deuxième filetage (27) prévu pour un raccord vissé entre la deuxième partie de raccord (22) et ladite partie d'attachement (31) dudit récipient (30).

11. Unité adaptatrice (20) selon la revendication 10, dans laquelle
le deuxième filetage (27) est un filetage extérieur.

12. Unité adaptatrice (20) selon l'une quelconque des revendications 7, 8 et 10, dans laquelle
ladite unité adaptatrice comprend une partie pour une manipulation (29), assistée par un outil, d'au moins un des raccords vissés.

13. Unité adaptatrice (20) selon la revendication 12, dans laquelle
ladite partie pour manipulation (29) assistée par outil comprend une fente pour serrer ou desserrer le raccord vissé entre ladite unité adaptatrice (20) et ledit récipient (30), ladite fente étant positionnée à l'entrée de ladite voie d'écoulement (23), qui est prévue moyennant ladite unité adaptatrice (20), et faisant face audit dispositif de vidange et remplissage (10).

14. Unité adaptatrice (20) selon l'une quelconque des revendications 5 à 13, dans laquelle
la première partie de raccord (21) comprend une gorge d'encliquetage (28) sur la périphérie extérieure qui est configurée pour être engagé par un élément complémentaire de ladite partie d'attachement (11) dudit dispositif de vidange et remplissage (10).

15. Unité adaptatrice (20) selon l'une quelconque des revendications 5 à 14, dans laquelle
au moins une des deux parties de raccord (21, 22) comprend un élément d'étanchéité (6) configuré pour sceller hermétiquement le raccord entre ladite unité adaptatrice (20) et ledit récipient (30) et/ou entre ladite unité adaptatrice (20) et ledit dispositif de vidange et remplissage (10).

16. Unité adaptatrice (20) selon la revendication 15 et selon l'une quelconque des revendications 8 et 10, dans laquelle
ledit élément d'étanchéité (6) est un joint torique qui est positionné en amont ou en aval du filetage (26, 27) de la partie de raccord (21, 22), en regardant dans la direction d'écoulement prévue du réfrigérant et/ou de l'huile de compresseur (40).

17. Unité adaptatrice (20) selon l'une quelconque des revendications 5 à 16, dans laquelle
au moins une des deux parties de raccord (21, 22) comprend une partie de guidage (7) configurée pour guider la partie respective de raccord (21, 22) pendant que l'on effectue le raccord de ladite unité adaptatrice (20) audit dispositif de vidange et remplissage (10) et/ou audit récipient (30).

18. Unité adaptatrice (20) selon l'une quelconque des revendications 6 à 17, dans laquelle
le poids cible peut être atteint par le premier composant (24).

19. Unité adaptatrice (20) selon l'une quelconque des revendications 5 à 18, dans laquelle
la première partie de raccord (21) comprend un disque de fixation (8).

20. Ensemble d'unité adaptatrice pour fournir l'unité adaptatrice (20) selon l'une quelconque des revendications 5 à 19, en combinaison avec revendication 6, comprenant le deuxième composant (25) et au moins deux des premiers composants (24), chacun étant conçu différemment de façon qu'ils peuvent être connectés à ladite partie d'attachement (11) d'un dispositif particulier de vidange et remplissage (10) dudit système de service (1) selon l'une quelconque des revendications 1 à 4.

21. Ensemble d'unité adaptatrice selon la revendication 20, dans lequel tous les premiers composants (24) compris dans ledit ensemble ont un poids particulier afin d'assurer que ladite unité adaptatrice (20) assemblée et ledit récipient (30) ont un poids total particulier qui est conforme à un poids cible spécifié par le dispositif particulier de vidange et remplissage (10).

22. Système de service (1) selon l'une quelconque des revendications 1 à 4, comprenant l'unité adaptatrice (20) selon l'une quelconque des revendications 6 à 19.

23. Système de service (1) selon l'une quelconque des revendications 1 à 4, comprenant ledit ensemble d'unité adaptatrice selon la revendication 20 ou 21.
